(19) Europäisches Patentamt
European Patent Office
Office européen des brevets

(11) **EP 2 814 153 A2**

(12) **EUROPEAN PATENT APPLICATION**

(43) Date of publication:
**17.12.2014 Bulletin 2014/51**

(51) Int Cl.:
**H02M 1/12** (2006.01)     **H02M 5/458** (2006.01)

(21) Application number: **14168295.5**

(22) Date of filing: **14.05.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **16.05.2013 US 201313896147**

(71) Applicant: **Rockwell Automation Technologies,
Inc.
Mayfield Heights, OH 44124 (US)**

(72) Inventors:
• **Lemberg, Nicholas
Milwaukee, WI Wisconsin 53202 (US)**
• **Cook, Michael T.
Hartland, WI Wisconsin 53029 (US)**
• **Kopiness, Jeremiah J.
Saukville, WI Wisconsin 53080 (US)**

(74) Representative: **Grünecker, Kinkeldey,
Stockmair & Schwanhäusser
Leopoldstrasse 4
80802 München (DE)**

(54) **Self-discharging capacitor**

(57)     A self-discharging capacitor may include a capacitor and a resistor coupled in parallel to the capacitor. The self-discharging capacitor may also include a housing such that the capacitor and the resistor may be enclosed within the housing. The housing may also enclose a potting material that is thermally conductive and electrically non-conductive.

FIG. 1

EP 2 814 153 A2

**Description**

BACKGROUND

Embodiments of the present disclosure relates generally to capacitors. More specifically, the present disclosure relates to discharging capacitors in an industrial automation drive or the like after power has been removed from the capacitor.

Industrial automation systems may employ various types of electronic devices such as an alternating current (AC) drive to provide a controllable AC voltage to various devices within the industrial automation system. The AC drive may receive AC voltage from an AC voltage source and convert the received AC voltage into direct current (DC) voltage using a rectifier. The AC drive may then convert the DC voltage into a controllable AC voltage using an inverter. In some cases, a regenerative AC drive may provide regenerated power back to a grid or to an AC voltage source from the inverter.

Unfortunately, a common problem with the use of the rectifier and the inverter in the AC drive or the regenerative AC drive includes the production of harmonic currents (i.e. currents that are usually integer multiples of the fundamental frequency), which may have a detrimental effect on the performance and reliability of other equipment coupled to the AC drive. These harmonic currents (harmonics) are typically caused by the switching of power conversion devices in the rectifier and the inverter of the AC drive. To attenuate these harmonics, inductor-capacitor-inductor (LCL) filters may be placed in series with the rectifier and the inverter such that the harmonics, due to the switching of power conversion devices in the rectifier and the inverter, may be reduced.

Generally, in order for the LCL filters to be effective, it is beneficial for the capacitors in the LCL filters to discharge fairly quickly. In conventional AC drives, the capacitors are discharged using bleed resistors. As such, the LCL filter may use additional wiring to incorporate the bleed resistors into its respective circuit. Moreover, the bleed resistors may produce a large amount of heat when the capacitors are discharging and when the AC drive operates under normal-operating conditions. As a result, the bleed resistors may be placed outside of an enclosure of the AC drive such that the heat dissipated by the bleed resistors do not adversely affect the components within the enclosure. Moreover, by using external bleed resistors, the AC drive may use a larger amount of space as compared to the AC drive alone. Accordingly, improved systems for discharging capacitors in an LCL filter or any other circuit are desirable.

BRIEF DESCRIPTION

In one embodiment, a self-discharging capacitor may include a capacitor and a resistor coupled in parallel to the capacitor. The self-discharging capacitor may also include a housing such that the capacitor and the resistor may be enclosed within the housing. The housing may also include a potting material that is thermally conductive and electrically non-conductive.

In another embodiment, a system may include an alternating current (AC) drive. The AC drive may include a rectifier that may convert AC voltage into direct current (DC) voltage, an inverter that may convert the DC voltage into a controllable AC voltage, and an inductor-capacitor-inductor (LCL) filter that may reduce harmonics generated by the rectifier, the inverter, or both. The LCL filter may include at least one capacitor-resistor assembly such that each capacitor-resistor assembly may include at least one capacitor and at least one resistor. Each respective capacitor may be coupled in parallel to a respective resistor, and each capacitor and resistor may be enclosed within a housing. The housing may include a potting material that is thermally conductive and electrically non-conductive.

In yet another embodiment, a method for manufacturing a three-phase self-discharging capacitor may include coupling a first resistor in parallel to a first capacitor, coupling a second resistor in parallel to a second capacitor, and coupling a third resistor in parallel to a third capacitor. The method may then include coupling the first capacitor, the second capacitor, and the third capacitor together, thereby creating a three-phase resistor-capacitor assembly. The three-phase resistor capacitor assembly may then be disposed into a housing. Afterwards, the method may include filling the housing with a potting material such that heat may dissipate evenly throughout the housing.

In yet another embodiment, a system may include a regenerative converter. The regenerative converter may include a rectifier that may convert AC voltage into direct current (DC) voltage and an inductor-capacitor-inductor (LCL) filter that may reduce harmonics generated by the rectifier. The LCL filter may also include at least one capacitor-resistor assembly, such that the at least one capacitor-resistor assembly may include at least one capacitor and at least one resistor. Here, each respective capacitor may be coupled in parallel to a respective resistor, such that each capacitor and each resistor may be enclosed within a housing. The housing may enclose a potting material that may be thermally conductive and electrically non-conductive.

DRAWINGS

These and other features, aspects, and advantages of the present invention will become better understood when the following detailed description is read with reference to the accompanying drawings in which like characters represent like parts throughout the drawings, wherein:

FIGS. 1 and 2 illustrate schematic diagrams of an alternating current (AC) drive employing an inductor-capacitor-inductor (LCL) filter, in accordance with embodiments presented herein;

FIG. 3 illustrates an electrical circuit diagram of a three-phase self-discharging capacitor assembly that may be employed in the AC drive of FIGS. 1 and 2, in accordance with embodiments presented herein;

FIG. 4 illustrates a flow chart of a method for manufacturing the self-discharging capacitor assembly of FIG. 3, in accordance with embodiments presented herein;

FIG. 5 illustrates a perspective view of the self-discharging capacitor assembly schematically represented in FIG. 3, in accordance with embodiments presented herein;

FIG. 6 illustrates a perspective view of internal features of the self-discharging capacitor assembly of FIG. 5, in accordance with embodiments presented herein;

FIGS. 7A and 7B illustrate an example top cross-sectional view of the three-phase self-discharging capacitor assembly of FIG. 5, in accordance with embodiments presented herein;

FIG. 8 illustrates an example top cross-sectional view of a two-phase self-discharging capacitor assembly, in accordance with embodiments presented herein; and

FIG. 9 illustrates an example top cross-sectional view of a single-phase self-discharging capacitor assembly, in accordance with embodiments presented herein.

DETAILED DESCRIPTION

Embodiments of the present disclosure are generally directed towards a self-discharging capacitor assembly that may be used in an alternating current (AC) drive or in series with any power converting devices. In one embodiment, a resistor may be coupled across or in parallel with a capacitor such that stored energy in the capacitor may be dissipated via the resistor. The resistor-capacitor assembly may then be placed within a housing and the empty space in the housing may be filled with a thermally conductive but electrically non-conductive material (i.e., potting material). As a result, the thermally conductive properties of the material may dissipate the heat evenly through out the potting material without substantially increasing the ambient temperature outside the housing.

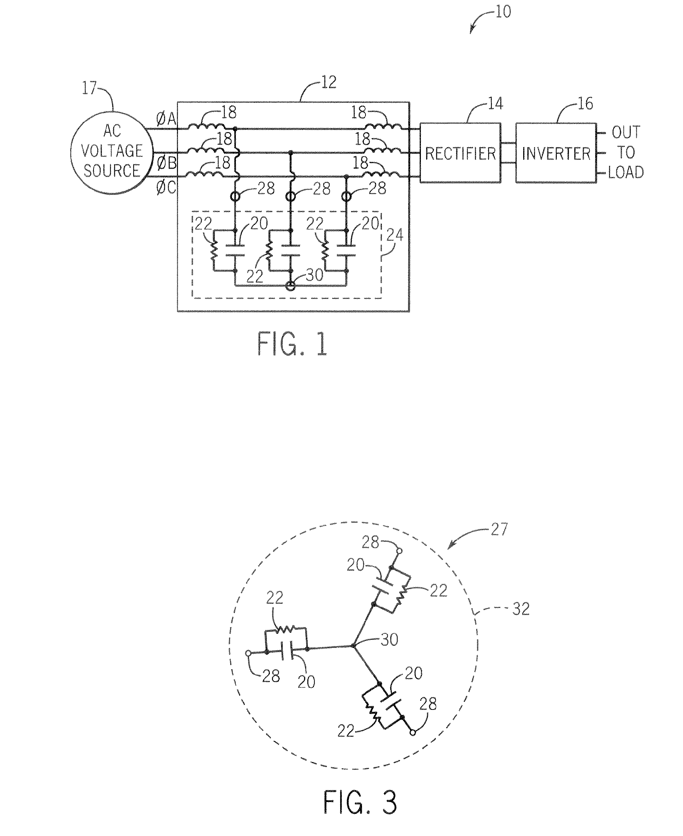

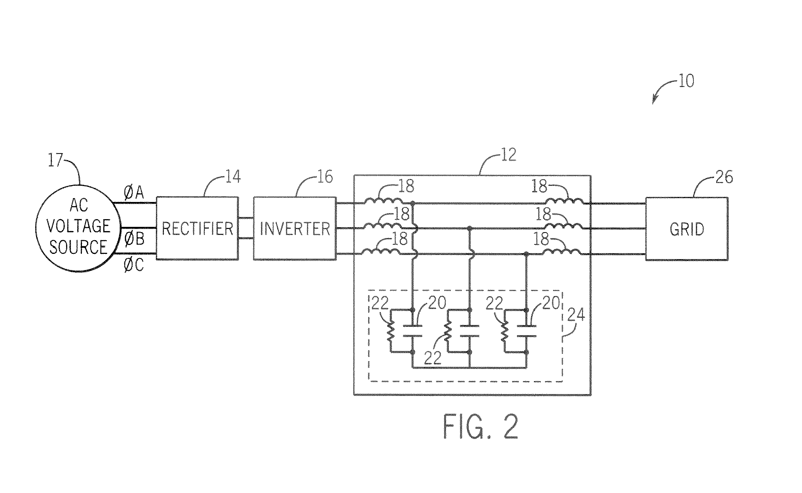

By way of introduction, FIGS. 1 and 2 illustrate two schematic diagrams of an AC drive 10 that may be used in an industrial automation system or the like. As shown in FIGS. 1 and 2, the AC drive 10 may include an inductor-capacitor-inductor (LCL) filter 12, a rectifier 14, and an inverter 16. In general, the rectifier 14 may receive three-phase AC voltage from an AC voltage source 17 and convert the AC voltage into a direct current (DC) voltage. The inverter 16 may then convert the DC voltage into a controllable AC voltage. In FIG. 1, the LCL filter 12 may be positioned between the AC voltage source 17 and the rectifier 14 to reduce input harmonics that may have been caused by power conversion devices (e.g., thyristors, insulated-gate bipolar transistors (IGBT), diodes) switching in the rectifier 14. Referring to FIG. 2, the LCL filter 12 may be positioned between the inverter 16 and an electric grid 26 to reduce output harmonics that may have been caused by power conversion devices switching in the inverter 16.

In either case, the LCL filter 12 may include inductors 18 and capacitors 20. Each capacitor 20 may be coupled in parallel with a resistor 22. The resistor 22 may discharge the capacitor 20 when no power is available at the capacitor 20. As mentioned above, in conventional discharging circuits, the resistors 22 may include bleed resistors that may have high impedance values. These bleed resistors are traditionally located outside an enclosure of the AC drive 10 due to the amount of heat generated by the resistors when the capacitors 20 are discharging. Moreover, since bleed resistors are often assembled as a series of resistors, the bleed resistor assembly in traditional systems may encompass a large amount of space in the industrial automation system, where space is generally limited.

Such deficiencies in traditional systems are now recognized and addressed by present embodiments. Indeed, in one embodiment, the capacitors 20 and the resistors 22 of FIGS. 1 and 2 may be enclosed within a single housing to form a self-discharging capacitor assembly 24. FIG. 3 illustrates an equivalent circuit 27 of the three-phase self-discharging capacitor assembly 24. As shown in FIG. 3, each capacitor 20 may have a node 28 that may be coupled to another electrical component (e.g., inductor 18). Each capacitor 20 may also have a common node 30 such that each capacitor 20 may be coupled together at a single node. Moreover, as mentioned above, each capacitor may be disposed within the same housing 32.

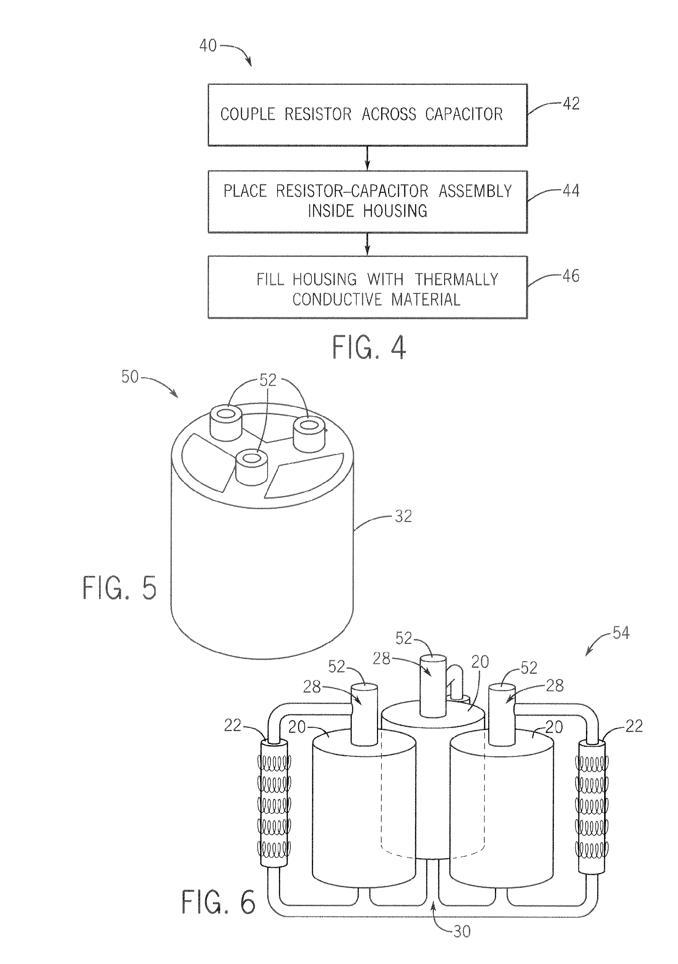

Keeping the circuit of FIG. 3 in mind, FIG. 4 depicts a flow chart of a method 40 that may be used to manufacture the self-discharging capacitor assembly 24. Although the method 40 will be described in a particular order, it should be noted that the method 40 should not be limited to being performed in one particular order. Indeed, certain aspects of the illustrated method 40 may be performed in a different order and additional procedural components may be performed as well.

Referring now to FIG. 4, at block 42, a resistor 22 may be coupled across a capacitor 20. The capacitor 20 may be a film capacitor, which may be better equipped to maintain a charge in the capacitor 20. However, it should be understood, that the method 40 may be performed with other types of capacitors such as ceramic capacitors, aluminum electrolytic capacitors, paper capacitors, tantalum electrolytic, and the like.

Generally, the resistor 22 may be selected such that it loses a small amount of power (i.e., watts) or heat and maintains a similar temperature as the capacitor 20. The amount of power loss may be represented by Equation 1 below:

$$W = V^2/R \qquad (1)$$

where W is the number of watts lost, V is the voltage across the capacitor 20 and/or the resistor 22 and R is the impedance value of the resistor 22. Keeping this in mind, the impedance value of the resistor 22 may be determined by first determining a maximum change in temperature ($\Delta T_{goal}$) and then calculating a resistance value based on a voltage applied across the capacitor 20 and the resistor 22 and Equation 1 above. For instance, the maximum change in temperature ($\Delta T_{goal}$) for the capacitor 22 may be determined according to Equation 2 below:

$$\Delta T_{goal} = \Delta T_{max\_capacitor} - \Delta T_{max\_ambient} \qquad (2)$$

where $\Delta T_{max\_capacitor}$ is the temperature rating of the capacitor as specified by the manufacturer of the capacitor 20 or the like, and $\Delta_{Tmax\_ambient}$ is the maximum ambient temperature rating for the environment in which the self-discharging capacitor assembly 24 may be present. Using the maximum change in temperature ($\Delta T_{goal}$) for the capacitor 22, the expected number of watts lost may be determined according to Equation 3 below:

$$\text{Watts Lost} = \Delta T_{goal} \times (W/^{\circ}C) \qquad (3)$$

where (W/°C) is the expected watts lost per degree Celsius as specified by the manufacturer of the resistor 22 or the like. Using the voltage being applied across the capacitor 20 and the resistor 22 and the expected number of watts lost, the impedance value of the resistor 22 may be determined based on Equation 4 below:

$$R = V^2 / \text{Watts Lost} \qquad (4)$$

Generally, the impedance of the resistor 22 may be relatively large such that the number of watts lost by the resistor may be minimized. In one embodiment, the resistor 22 may be a wirewound resistor that may have a large impedance value (e.g., 150 kΩ). By using a large impedance resistor, the resistor 22 may experience a relatively low amount of power (i.e., watts) or heat loss when the capacitor 20 discharges.

In addition to having a large impedance value, the resistor 22 may include a large surface area that may be used to dissipate the watts or heat generated by the resistor 22 when the capacitor 20 discharges. This large surface area may provide a large area for the heat generated by the resistor 22 to dissipate, thereby minimizing the difference between the temperature of the resistor 22 and the temperature of the capacitor 20. Since the resistor 22 may be selected such that it experiences a small amount of power (i.e., watts) or heat loss, the temperature of the resistor 22 should be similar to the temperature of the capacitor 20. In other words, the resistor 22 may be selected such that the difference ($\Delta T$) between the temperature of the resistor 22 and the temperature of the capacitor 20 may be minimized. As such, the impedance of the resistor 22 may also be determined using a desired difference ($\Delta T$) between the temperature of the resistor 22 and the temperature of the capacitor 20 and Equations 3-4 above. By using the resistor 22 that has a low temperature difference ∆T, the heat dissipated by the resistor 22 may not damage the film of the capacitor 20. That is, the low temperature difference ∆T may prevent localized damage to the film of the capacitor 20.

In lieu of using a wirewound resistor, the resistor 22 may also be a plastic film or thin film resistor. In one embodiment, the plastic film or thin film resistor may be interleaved with or wrapped around the capacitor 20. In any case, as mentioned above, the plastic film or thin film resistor may be selected such that it has a high impedance value and a large surface area such that the resistor loses a small amount of power (i.e., watts) or heat and maintains a similar temperature as the capacitor 20.

Referring back to the method 40, after the resistor 22 is coupled across the capacitor 20, at block 44, the resulting resistor-capacitor assembly may be placed inside the housing 32. The housing 32 may be cylindrically shaped, but it should be noted that the housing 32 may be shaped as a square, rectangle, or the like. The housing 32 may be a flame retardant thermoplastic case. In one embodiment, the housing 32 may be larger than the resistor-capacitor assembly such that the housing 32 may include some amount empty space that may be filled using a potting material as described below.

At block 46, the empty space of the housing 32 may be filled with a potting material or compound that may be thermally conductive and electrically insulative (i.e., non-conducting). In one embodiment, the potting material may be a thermally conductive urethane or epoxy that wicks excess heat away from the resistor-capacitor assembly. As such, the potting material may be a gel-based material, an oil-based material, or the like. In any case, the thermally conductive potting material may ensure that heat dissipated by the resistor 22 may be distributed evenly inside the self-discharging capacitor assembly 24. Further, the thermally conductive potting material may enable the self-discharging capacitor assembly 24 to have a uniform temperature across the housing 32.

Common perception by capacitor manufacturers is that integrating a resistor into a capacitor housing is undesirable because the capacitor will be overheated, thereby reducing the life of the capacitor. However, it is now recognized that by distributing the dissipated heat evenly inside the self-discharging capacitor assembly 24, the heat dissipated by the resistor 22 when the capacitor 20 discharges may not provide a direct heat source on the capacitor 20. Moreover, since the resistor 22 may be designed such that a small amount of watts are lost over a large amount of surface area and dissipated evenly via the thermally conductive potting material, the temperature of the self-discharging capacitor assembly 24 may not substantially contribute to the ambient temperature of the AC drive. In other words, the difference in temperature between the self-discharging capacitor assembly 24 and the ambient temperature may not be substantial (e.g., less than 10°C). In certain embodiments, the resistor 22 may be selected such that the number of watts lost by the resistor 22 may not cause the temperature inside the housing 32 to exceed a temperature rating, as specified by a manufacturer or the like, for the capacitor 20.

After the empty space of the housing 32 is filled with the potting material at block 46, the resulting self-discharging capacitor assembly 24 may be considered to be a single-phase self-discharging capacitor assembly 24 since only one resistor-capacitor assembly is present in the housing 32. However, it should be noted that a multi-phase self-discharging capacitor assembly 24 may be manufactured using the same method 40 described above by assembling additional resistor-capacitor assemblies and coupling one end of each assembled resistor-capacitor assembly together (i.e., at the common node 30) at block 42. The method 40 may then continue at block 44 by placing each of the assembled resistor-capacitor assemblies into the same housing 32. Then, at block 46, the empty space within the housing 32 may be filled with the potting material as described above.

Generally, the AC drive 10 of FIG. 1 and FIG. 2 depicts a three-phase AC drive. As such, the LCL filter 12 includes an LCL filter coupled to each phase of the AC drive 10. In one embodiment, a three-phase self-discharging capacitor assembly 24 may be manufactured as described above to use as part of the LCL filter 12. Keeping this in mind, FIG. 5 illustrates a perspective view 50 of an example three-phase self-discharging capacitor assembly 24 after being assembled using the method 40. As shown in FIG. 5, the three-phase self-discharging capacitor assembly 24 may include three terminals 52, which may correspond to the three nodes 28 in the corresponding circuit 27. Although the terminals are depicted in FIG. 5 as being disposed on the surface of the housing 32, it should be noted that in some embodiments the terminals 52 may be partially or completely disposed inside the housing 32.

In essence, the electrical connections between each capacitor 20 and each resistor 22 are prepared during the manufacturing of the three-phase self-discharging capacitor assembly 24 described above with reference to FIG. 4. As such, when assembling the LCL filter 12 for the AC drive 10 using the three-phase self-discharging capacitor assembly 24, an assembler may simply provide electrical connections from an inductor 18 located on each phase of the AC drive 10 to one of the terminals 52 of the three-phase capacitor assembly 24. As a result, the assembler may assemble the AC drive 10 or connect the LCL filter 12 to another circuit more efficiently than using bleed resistors in conventional AC drives. In other words, since the electrical connections between each capacitor 20 and resistor 22 is prepared during the manufacturing of the three-phase capacitor assembly 24, the assembly of the LCL filter 12 into the AC drive can now be more efficient than conventional AC drive assembling practices. For example, in conventional AC drives that use external bleed resistors to discharge the capacitors 20 of its LCL filter 12, an assembler would make an electrical connection (via node 28) between an inductor 18 located on each phase of the AC drive 10 and a respective capacitor 20 (via node 28), two electrical connections between a respective capacitor and its respective resistor (i.e., parallel connection), and another electrical connection between each respective capacitor (via node 30). In stark contrast, when assembling the LCL filter 12 for the AC drive 10 using the three-phase self-discharging capacitor assembly 24, the assembler may make the same electrical connections as discussed in the above example by simply providing electrical connections from an inductor 18 located on each phase of the AC drive 10 to one of the terminals 52 of the three-phase capacitor assembly 24.

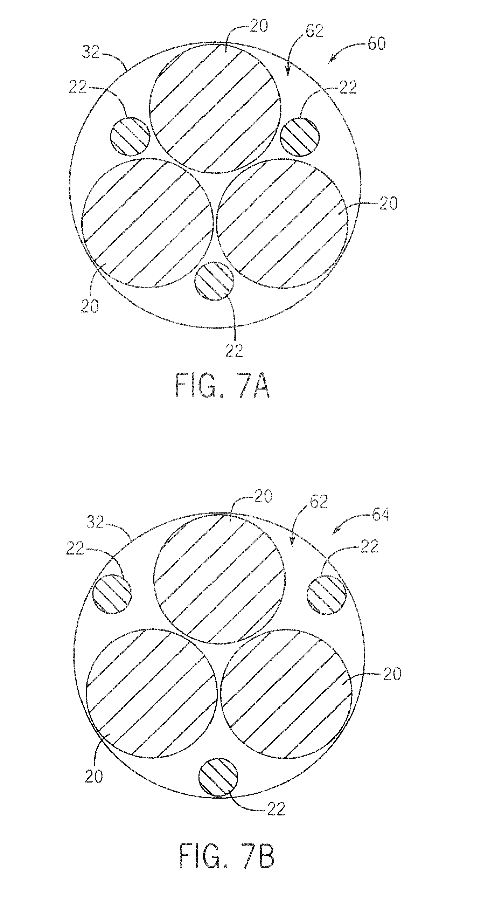

FIG. 6 illustrates a perspective view 54 of internal features of the three-phase self-discharging capacitor assembly 24 depicted in FIG. 5. As shown in FIG. 6, each resistor 22 is coupled across or in parallel with a corresponding capacitor 20. In one embodiment, each capacitor 20 is located close to the center of the housing 32 of the three-phase self-discharging capacitor assembly 24. To illustrate this better, FIG. 7A depicts one embodiment of a cross-sectional top view 60 of the three-phase self-discharging capacitor assembly 24 that shows how each capacitor 20 may be positioned adjacent to each other in the center of the housing 32 of the three-phase self-discharging capacitor assembly 24. In FIG. 7A, each resistor 22 may also be positioned close to the center of the housing 32 and adjacent to two capacitors 20. The additional or empty space in the three-phase self-discharging capacitor assembly 24 may include thermally conductive and electrically insulative potting material 62. As mentioned above, the thermally conductive and electrically insulative potting material 62 may distribute heat generated from the resistors 22 evenly throughout the potting material.

Since the thermally conductive and electrically insulative potting material 62 may evenly distribute the heat generated from the resistors 22 throughout the housing 32, the placement of the resistors 22 should not be limited to being close to the center of the housing 32 or adjacent to the capacitors 20. instead, the resistors 22 may be placed in any space within the housing 32 that is not occupied by the capacitor 20. For example, FIG. 7B illustrates a cross-sectional top view 64 of the three-phase self-discharging capacitor assembly 24 where the resistors 22 are placed adjacent to the edge of the housing 32. Here, as in the embodiment depicted in FIG. 7A, the thermally conductive and electrically insulative potting material 62 may distribute the heat generated from the resistors 22 evenly throughout the potting material 62.

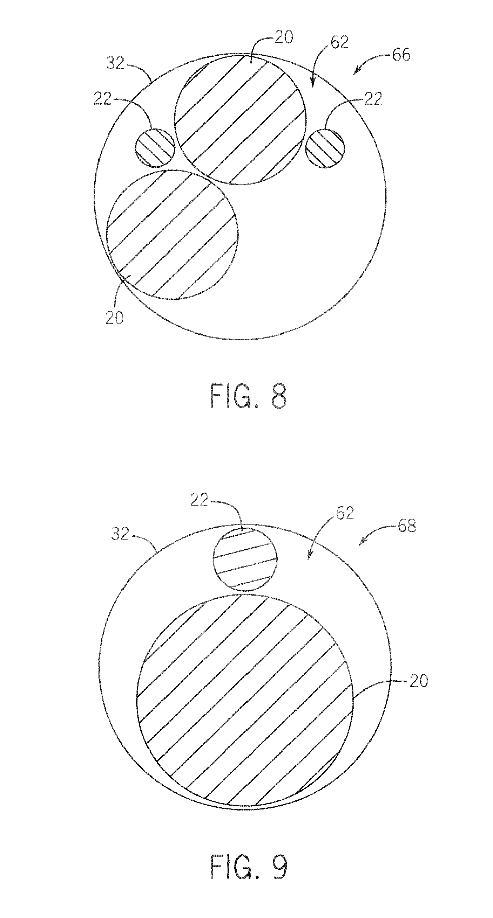

As mentioned above, the three-phase self-discharging capacitor assembly 24 may also be manufactured for other multi-phase systems or a single-phase system as well. For example, FIG. 8 illustrates a cross-sectional top view 66 of an example two-phase self-discharging capacitor assembly 24. Similarly, FIG. 9 illustrates a cross-sectional top view 68 of an example single-phase self-discharging capacitor assembly 24.

Referring now to FIG. 8, the two-phase self-discharging capacitor assembly may be similar to that of the three-phase self-discharging capacitor assembly of FIG. 7A minus one of the resistor-capacitor assemblies. Moreover, it should be noted that like the three-phase self-discharging capacitor described above, the placement of the resistors 22 in the housing 32 of the two-phase self-discharging capacitor should not be limited to being adjacent to the capacitor 20, as depicted in FIG. 8. Instead, the resistors 22 may be placed in any space within the housing 32 that is not occupied by the capacitor 20 such that the heat generated by the resistors 22 is evenly distributed throughout the self-discharging capacitor 20 via the thermally conductive potting material 62. In the same manner, the resistor 22 in the single-phase self-discharging capacitor assembly of FIG. 9 may be placed in any space within the housing 32 that is not occupied by the capacitor 20.

Although each capacitor assembly 24 (i.e., single-phase and multi-phase) described above has been described with respect to the LCL filter 12 in the AC drive 10, it should be noted that each capacitor-resistor assembly 24 described above may be used in a wide variety of electrical devices, such as a regenerative converter bus supply, a power rectifier, an inverter, and the like, and is not limited to being used in LCL filters that are part of an AC drive. For example, a regenerative converter may include an LCL filter 12 in series with a rectifier 14, such that the LCL filter 12 may reduce harmonics produced by the rectifier 14. Here, like the AC drive 10, the LCL filter 12 may employ the capacitor-resistor assembly 24 described above to avoid using bleed resistors and the like.

Moreover, although the capacitor-resistor assemblies depicted in FIGS. 5-9 illustrate assemblies having three capacitors disposed in a single housing with three resistors, it should be noted that three single-phase capacitor-resistor assemblies or one two-phase capacitor-resistor assembly and one single-phase capacitor-resistor assembly may also be used instead of a three-phase capacitor-resistor assembly. In this manner, the resistors may still be placed within the AC drive 10 or other type of electronic device (e.g., regenerative converter) because the heat dissipated from the resistors 22 disposed inside the housing 32 may be localized to within the housing 32.

While only certain features of the invention have been illustrated and described herein, many modifications and changes will occur to those skilled in the art. It is, therefore, to be understood that the appended claims are intended to cover all such modifications and changes as fall within the true spirit of the invention.

The following is a list of further preferred embodiments of the invention:

Embodiment 1. A device, comprising:

a housing;

a capacitor;

a resistor coupled in parallel to the capacitor, wherein the capacitor and the resistor are disposed within the housing; and

a potting material that is thermally conductive and electrically non-conductive, wherein the potting material is disposed around the capacitor and the resistor within the housing.

Embodiment 2. The device of embodiment 1, wherein the capacitor is a film capacitor, a ceramic capacitor, an aluminum electrolytic capacitor, a paper capacitor, or a tantalum electrolytic capacitor.

Embodiment 3. The device of embodiment 1, wherein the resistor is a wirewound resistor, a plastic film resistor, or a thin film resistor.

Embodiment 4. The device of embodiment 1, wherein the resistor is interleaved with the capacitor.

Embodiment 5. The device of embodiment 1, wherein the housing is cylindrically shaped, squarely shaped, or rectangularly shaped.

Embodiment 6. The device of embodiment 1, wherein the housing is flame retardant.

Embodiment 7. The device of embodiment 1, wherein the housing is a thermoplastic case.

Embodiment 8. The device of embodiment 1, wherein the potting material comprises urethane or epoxy.

Embodiment 9. They device of embodiment 1, wherein the potting material is configured to dissipate heat generated by the resistor evenly throughout the system.

Embodiment 10. A system, comprising:

an alternating current (AC) drive, comprising:

a rectifier configured to convert AC voltage into direct current (DC) voltage;

an inverter configured to convert the DC voltage into a controllable AC voltage; and

an inductor-capacitor-inductor (LCL) filter configured to reduce harmonics generated by the rectifier, the inverter, or both, wherein the LCL filter comprises at least one capacitor-resistor assembly, wherein the at least one capacitor-resistor assembly comprises:

at least one capacitor; and

at least one resistor, wherein each respective capacitor of the at least one capacitor is coupled in parallel to a respective resistor of the at least one resistor, wherein the at least one capacitor and the at least one resistor are enclosed within a housing, and wherein the housing encloses a potting material that is thermally conductive and electrically non-conductive.

Embodiment 11. The system of embodiment 10, wherein the at least one capacitor-resistor assembly comprises:

a first capacitor-resistor assembly comprising a first resistor and a second resistor coupled in parallel to a first capacitor and a second capacitor, respectively, wherein the first capacitor and the second capacitor are coupled together at a first node; and

a second capacitor-resistor assembly comprising a third resistor coupled in parallel to a third capacitor.

Embodiment 12. The system of embodiment 10, wherein the at least one capacitor-resistor assembly comprises:

a first capacitor-resistor assembly comprising a first resistor coupled in parallel to a first capacitor;

a second capacitor-resistor assembly comprising a second resistor coupled in parallel to a second capacitor; and

a third capacitor-resistor assembly comprising a third resistor coupled in parallel to a third capacitor.

Embodiment 13. The system of embodiment 10, wherein the housing comprises at least one terminal, wherein a number of the at least one terminal corresponds to a number of the at least one terminal.

Embodiment 14. The system of embodiment 13, wherein the at least one terminal is disposed outside of the housing or partially inside the housing.

Embodiment 15. A method, comprising:

coupling a first resistor in parallel to a first capacitor;

coupling a second resistor in parallel to a second capacitor;

coupling a third resistor in parallel to a third capacitor;

coupling the first capacitor, the second capacitor, and the third capacitor together, thereby creating a three-phase resistor-capacitor assembly;

disposing the three-phase resistor capacitor assembly into a housing; and

filling the housing with a potting material configured to dissipate heat evenly throughout the housing.

Embodiment 16. The method of embodiment 16, wherein the first resistor, the second resistor, and the third resistor are coupled adjacent to the first capacitor, the second capacitor, and the third capacitor, respectively.

Embodiment 17. The method of embodiment 16, wherein the first resistor, the second resistor, and the third resistor are positioned adjacent to an inner wall of the housing.

Embodiment 18. The method of embodiment 16, wherein the capacitor is a film capacitor.

Embodiment 19. The method of embodiment 16, wherein the resistor is a wirewound resistor.

Embodiment 20. The method of embodiment 16, wherein the potting material is thermally conductive and electrically non-conductive.

Embodiment 21. A system, comprising:

a regenerative converter, comprising:

a rectifier configured to convert AC voltage into direct current (DC) voltage; and

an inductor-capacitor-inductor (LCL) filter configured to reduce harmonics generated by the rectifier, wherein the LCL filter comprises at least one capacitor-resistor assembly, wherein the at least one capacitor-resistor assembly comprises:

at least one capacitor; and

at least one resistor, wherein each respective capacitor of the at least one capacitor is coupled in parallel to a respective resistor of the at least one resistor, wherein the at least one capacitor and the at least one resistor are enclosed within a housing, and wherein the housing encloses a potting material that is thermally conductive and electrically non-conductive.

**Claims**

1. A system, comprising:

an alternating current (AC) drive, comprising:

a rectifier configured to convert AC voltage into direct current (DC) voltage;
an inverter configured to convert the DC voltage into a controllable AC voltage; and
an inductor-capacitor-inductor (LCL) filter configured to reduce harmonics generated by the rectifier, the inverter, or both, wherein the LCL filter comprises at least one capacitor-resistor assembly, wherein the at least one capacitor-resistor assembly comprises:

at least one capacitor; and
at least one resistor, wherein each respective capacitor of the at least one capacitor is coupled in parallel to a respective resistor of the at least one resistor, wherein the at least one capacitor and the at least one resistor are enclosed within a housing, and wherein the housing encloses a potting material that is thermally conductive and electrically non-conductive.

2. The system of claim 1, wherein the at least one capacitor-resistor assembly comprises:

a first capacitor-resistor assembly comprising a first resistor and a second resistor coupled in parallel to a first capacitor and a second capacitor, respectively, wherein the first capacitor and the second capacitor are coupled together at a first node; and
a second capacitor-resistor assembly comprising a third resistor coupled in parallel to a third capacitor.

3. The system of claim 1 or 2, wherein the at least one capacitor-resistor assembly comprises:

a first capacitor-resistor assembly comprising a first resistor coupled in parallel to a first capacitor;
a second capacitor-resistor assembly comprising a second resistor coupled in parallel to a second capacitor; and
a third capacitor-resistor assembly comprising a third resistor coupled in parallel to a third capacitor.

4. The system of any one of claims 1 to 3, wherein the housing comprises at least one terminal, wherein a number of the at least one terminal corresponds to a number of the at least one terminal.

5. The system of claim 4, wherein the at least one terminal is disposed outside of the housing or partially inside the housing.

6. A method, comprising:

coupling a first resistor in parallel to a first capacitor;
coupling a second resistor in parallel to a second capacitor;
coupling a third resistor in parallel to a third capacitor;
coupling the first capacitor, the second capacitor, and the third capacitor together, thereby creating a three-phase resistor-capacitor assembly;
disposing the three-phase resistor capacitor assembly into a housing; and
filling the housing with a potting material configured to dissipate heat evenly throughout the housing.

7. The method of claim 6, wherein the first resistor, the second resistor, and the third resistor are coupled adjacent to the first capacitor, the second capacitor, and the third capacitor, respectively.

8. The method of claim 6 or 7, wherein the first resistor, the second resistor, and the third resistor are positioned adjacent to an inner wall of the housing.

9. The method of any one of claims 6 to 8, wherein the capacitor is a film capacitor.

10. The method of any one of claims 6 to 9, wherein the resistor is a wirewound resistor.

11. The method of any one of claims 6 to 10, wherein the potting material is thermally conductive and electrically non-

conductive.

FIG. 1

FIG. 3

FIG. 2

40

| COUPLE RESISTOR ACROSS CAPACITOR | 42 |

↓

| PLACE RESISTOR-CAPACITOR ASSEMBLY INSIDE HOUSING | 44 |

↓

| FILL HOUSING WITH THERMALLY CONDUCTIVE MATERIAL | 46 |

FIG. 4

50

52

32

FIG. 5

54

52

28

20

52

52

28

28

22

20

20

22

FIG. 6

30

FIG. 7A

FIG. 7B

FIG. 8

FIG. 9